# EUROPÄISCHE PATENTSCHRIFT

(11) **EP 1 288 079 B1**
(45) Veröffentlichungstag und Bekanntmachung des Hinweises auf die Patenterteilung: **15.09.2004**
(21) Anmeldenummer: 02018406.5
(22) Anmeldetag: 16.08.2002
(51) Int. Cl.: B60R 21/13

(54) **Überrollschutzsystem für Kraftfahrzeuge mit Soll-Deformationsstelle**
Roll-over protection system with a deformable portion
Systéme de protection en cas de retournement d'un véhicle automobile comportant une zone de déformation programmée

(30) Priorität: 31.08.2001 DE 10142466; 25.05.2002 DE 10223420
(43) Veröffentlichungstag der Anmeldung: 05.03.2003
(73) Patentinhaber: ISE Innomotive Systems Europe GmbH, 51702 Bergneustadt (DE); Volkswagen AG, 38436 Wolfsburg (DE)
(72) Erfinder: Hövelmann, Klaus, 38551 Ribbesbüttel (DE); Nass, Michael, 51702 Bergneustadt (DE); Zupancic, Manuela, 51702 Bergneustadt (DE); Nowack, Reinhard, 57489 Drolshagen (DE); Menne, Hans-Gerd, 51702 Bergneustadt (DE)
(74) Vertreter: Fuchs Mehler Weiss & Fritzsche

(56) Entgegenhaltungen:
- EP-A- 0 952 042
- DE-C- 19 838 989

## Beschreibung

Die Erfindung bezieht sich auf ein Überrollschutzsystem, mit
- einem Überrollkörper, der sich im Überrollfall an einem Aufbauteil des Kraftfahrzeuges abstützt und kopfseitig mindestens ein Stützelement besitzt, über welches das Kraftfahrzeug im Überschlagfall abrollt, und
- einer Soll-Deformationsstelle zum Abbau von Lastspitzen bei einem Überschlag.

Derartige Überrollschutzsysteme dienen zum Schutz der Insassen in Kraftfahrzeugen ohne schützendes Dach, typischerweise in Cabriolets oder Sportwagen.

Es ist dabei bekannt, einen die gesamte Fahrzeugbreite überspannenden, fest installierten Überrollbügel vorzusehen.

Bei dieser Lösung wird der erhöhte Luftwiderstand und das Auftreten von Fahrgeräuschen als nachteilig empfunden, abgesehen von der Beeinträchtigung des Fahrzeugaussehens.

Es ist auch bekannt, jedem Fahrzeugsitz einen höhenunveränderlich fest installierten Überrollbügel zuzuordnen. Diese Lösung wird typischerweise bei Sportwagen zur Unterstreichung des sportlichen Aussehens eingesetzt.

Weitverbreitet bei Cabriolets sind konstruktive Lösungen, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise einen in einem fahrzeugfesten Führungskörper geführten U-förmigen oder aus einem Profilkörper gebildeten Überrollkörper, auf, wobei der Führungskörper in einem Kassetten-Gehäuse befestigt ist. Dieser Überrollkörper wird im Normalzustand gegen die Vorspannkraft einer Antriebs-Druckfeder durch eine Haltevorrichtung in einer unteren Ruhelage gehalten, und ist im Überschlagfall, sensorgesteuert unter Lösen der Haltevorrichtung, durch die Federkraft der Antriebs-Druckfeder in eine obere, schützende Stellung bringbar, wobei eine dann in Wirkeingriff tretende Verriegelungseinrichtung, die Wiedereinfahrsperre, ein Eindrücken des Überrollbügels verhindert.

Dabei ist jedem Fahrzeugsitz eine Kassette zugeordnet.

Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, oder durch ein pyrotechnisches Auslöseglied, gebildet ist.

Die als Wiedereinfahrsperre dienende Verriegelungseinrichtung besteht typischerweise aus einer schwenkbar angelenkten, federvorgespannten Rastklinke mit Zahnsegmenten und einer feststehenden Zahnleiste, einem Rastdorn oder dergleichen, wobei ein Verriegelungs-Element mit dem Überrollbügel und das andere fahrzeugfest verbunden ist.

Eine derartige Kassetten-Konstruktion eines Überrollbügelschutzsystems mit einem U-förmigen Überrollbügel zeigt beispielsweise die DE 43 42 400 A 1; eine alternative Kassettenkonstruktion mit einem Überrollkörper in Form eines Profilkörpers zeigen insbesondere die DE 195 23 790 C1 und DE 198 38 989 C1.

Das vorgenannte bekannte Überrollschutzsystem nach der DE 43 42 400 A1 weist ein Gehäuse in Form einer einseitig offenen, U-förmigen Kassette auf, mit zwei Seitenwänden, die auf der offenen Seite der Kassette jeweils einen nach außen abgekanteten Winkelbabschnitt zur fahrzeugfesten Befestigung der Kassette besitzen, an denen weiterhin ein Bodenblech befestigt ist, und die schließlich frontseitig über eine Deckwand miteinander verbunden sind. Das Überrollschutzsystem besitzt weiterhin einen U-förmigen Überrollbügel bestehend aus einem gekrümmten Abschnitt und zwei parallelen Schenkelrohren, die jeweils eine geschlossene Mantelfläche besitzen, und deren offene Enden über ein traversenartiges, versteifendes Verbindungselement miteinander verbunden sind.
Das System weist ferner zwei mit einem Ende am Gehäuseboden angebrachte, im Innern jeweils eine Druckfeder für den alleinigen Antrieb des Überrollbügels aufnehmende, Standrohre, die jeweils von einem Schenkelrohr koaxial umgriffen sind und ebenfalls eine geschlossene Mantelfläche aufweisen sowie einen am oberen Ende des Gehäuses flächig an den Seitenwänden der Kassette angebrachten Führungsblock auf, der Führungsöffnungen zur zusätzlichen äußeren Führung der Schenkelrohre besitzt.

Das bekannte alternative Überrollschutzsystem nach der vorstehend zitierten DE 198 38 989 C1 besitzt einen Überrollkörper, ausgebildet als biegeversteifter Kastenprofil-Bügelkörper, der sich über die gesamte Bügelbreite erstreckt, und der in einem fahrzeugfesten, die Kassette bildenden kastenartigen Grundprofil, dem Profil-Führungskörper, geführt ist. Im Kopf des Bügelkörpers ist ein traversenartiges Stützelement formschlüssig aufgenommen, über welches das Fahrzeug im Überschlag abrollt, d.h. welches im direkten Bodenkontakt steht. Im Fall der ähnlich gelagerten zitierten DE 195 23 790 C1 besteht der Überrollbügel aus einem brillenartigen Profil-Bügelkörper; der in einem fahrzeugfesten Profil-Führungskörper, der sich nur über einen Teilbereich des Bügel-Profilkörpers erstreckt, geführt ist. Bei beiden Konstruktionen ist jeweils eine Zahnleiste, die an dem Profil-Bügelkörper angeschraubt ist, und eine am Profil-Führungskörper drehbar angelenkte Zahnklinke, als Verriegelungseinrichtung vorgesehen.

Bei einem Überschlag muß das Überrollschutzsystem mittels des Überrollkörpers, und bei ausfahrbaren Systemen zusätzlich mittels des Führungskörpers und dessen Befestigung im Fahrzeug sowie der Verriegelungseinrichtung und dessen Befestigung (Wiedereinfahrsperre), die insbesondere in Überrollkörper-Verfahrrichtung stoßartig auftretende Last aufnehmen. Die hierbei auftretenden Kräfte können in Abhängigkeit von Geschwindigkeit und Masse des Fahrzeuges, sowie Aufschlagwinkel und Beschaffenheit der Aufschlagfläche nach neuesten Erkenntnissen bei besonders steifen Systemen kurzzeitige Belastungsspitzen von über 10 Tonnen auftreten können, wobei die typischerweise auftretende Grundlast, auf die die Systeme ausgelegt sind, ca. 5,0 - 7,0 Tonnen beträgt.

Um derartig hohe Kräfte aufnehmen zu können, ist man bislang den Weg gegangen, das ausfahrbare Überrollschutzsystem in Gänze als verstärktes, starres, d.h. nicht deformierbares System auszubilden. Dabei wurden der Überrollkörper, der Führungskörper und seine Befestigung am Fahrzeug so ausgelegt, daß sie bis zu möglichst hohen Lasten ein nichtdeformierbares, starres System bilden. Ferner wurde die Wiedereinfahrsperre, d.h. die Verriegelungsbauteile und deren Befestigungsmittel, d.h. die Dimensionierung der Zahnstangen und deren Befestigungsschrauben bzw. konkret die formschlüssige Aufnahme im Überrollkörper sowie die Rastklinke und der Bolzen, mit der sie im Führungskörper angelenkt ist, einschließlich des Lagers des Bolzens im Führungskörper, auf die sehr hohe Belastung ausgelegt.

Dieser Weg
- erwies sich jedoch wirtschaftlich als nicht sinnvoll, weil insbesondere ein hoher Material-Aufwand betrieben werden müßte,
- benötigt einen entsprechend größeren Bauraum für die verstärkten Elemente, der in der Regel nicht zur Verfügung steht, so daß der Lastaufnahme Grenzen gesetzt waren, und
- birgt die Gefahr in sich, daß die Elemente der Wiedereinfahrsperre schlagartig zerstört werden und dadurch die Wiedereinfahrsperre ihre Schutzfunktion total verliert.

Macht man andererseits das System Überrollkörper-Führungskörper weniger starr, kann es sich beim Auftreten höherer Kräfte deformieren. Dieses Deformieren kann dabei, da es nicht gezielt erfolgt, den Überrollkörper so verformen, daß er seine Schutzfunktion teilweise verlieren kann.

Durch die DE 199 31 224 A1, die dem Oberbegriff des Anspruchs 1 entspricht, ist auch ein Überrollschutzsystem bekannt geworden, bei dem der U-förmige Überrollbügel aus einem spröden Werkstoff, typischerweise einem faserverstärkten Kunststoff, besteht, wobei jeder Schenkel über ein Deformations-Element mit der Karosserie des Fahrzeuges verbunden ist. Mit diesem System soll bewußt durch den spröden Werkstoff die Steifigkeit des Überrollkörpers erhöht werden, wobei das Deformations-Element verhindern soll, daß der Überrollkörper schlagartig bei Überschreitung einer bestimmten Belastungsgrenze bricht. Diese bekannte Maßnahme ist jedoch an einen Überrollbügel aus speziellem, nichtmetallischen Material gebunden. Sie ist zudem nicht bei ausfahrbaren Systemen anwendbar, sondern nur bei starren Systemen.

Aus der DE 44 44 894 ist auch ein Überrollbügel bekannt geworden, dessen bogenförmig ausgebildete Stützzonen mit energieaufnehmenden Verkleidungsteilen bestückt sind. Diese Maßnahme dient dem Fahrzeuginsassen als Kopfaufprallschutz. Dementsprechend sind diese Deformationselemente nur auf Belastungen hin ausgelegt, wie sie typischerweise für Verkleidungsteile im Fahrzeuginnenraum angenommen werden. Hohe Belastungsspitzen, wie sie vorne beschrieben wurden, können daher nicht aufgefangen werden.

Durch die EP 0 952 042 A1 ist ein Überrollbügel in Schalenbauweise mit Formstrukturierungen bekannt geworden, der im Scheitelbereich eine sich verzehrende Abriebzone zum Abbau von Reibenergie, die beim Abrutschen des überschlagenen Kraftfahrzeuges auf dem Überrollbügel entsteht, aufweist. Mit diesem System können ebenfalls keine kurzzeitig auftretende hohe Belastungsspitzen, die beim ersten Bodenkontakt des Überrollbügel-Kopfes mit dem Erdboden auftreten, abgefangen werden.

Der Erfindung liegt die Aufgabe zugrunde, auf der Basis des Prinzipes des Einbaues einer Soll-Deformationsstelle in das Überrollschutzsystem diese so auszubilden, daß sie nicht nur bei starren, sondern insbesondere auch bei ausfahrbaren Systemen sowie bei den Systemen mit typischerweise metallischen Überrollkörpern anwendbar ist.

Die Lösung dieser Aufgabe gelingt bei einem Überrollschutzsystem für Kraftfahrzeuge, mit
- einem Überrollkörper, der sich im Überrollfall an einem Aufbauteil des Kraftfahrzeuges abstützt und kopfseitig mindestens ein Stützelement besitzt, über welches das Kraftfahrzeug im Überschlagfall abrollt, und
- einer Soll-Deformationsstelle zum Abbau von Lastspitzen bei einem Überschlag,

gemäß der Erfindung dadurch, daß das Stützelement als definierte Soll-Deformationsstelle für einen begrenzten, definierten Deformationsweg in Last-Richtung nach einem vorgegebenen Kraft-Weg-Diagramm zum Energieabbau der zum Zeitpunkt des Bodenkontaktes des Stützelementes kurzzeitig auftretenden hohen Lastspitze durch Verformungsarbeit ausgebildet ist.

Bei ausfahrbaren Schutzsystemen gelingt die Lösung der Aufgabe durch ein Überrollschutzsystem für Kraftfahrzeuge mit einem Überrollkörper, der in einem fahrzeugfesten Führungskörper geführt aufgenommen ist, der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine mittels einer Wiedereinfahrsperre verriegelte obere, schützende Stellung bringbar ist, und der kopfseitig ein traversenartiges Stützelement besitzt, über welches das Kraftfahrzeug im Überschlagfall abrollt,
gemäß der Erfindung dadurch, daß der Überrollkörper, der zugeordnete Führungskörper und dessen Befestigung am Fahrzeug, sowie die Wiedereinfahrsperre bezogen auf die bei einem Überschlag auftretende Maximallast als starres System ausgebildet sind, und das traversenartige Stützelement als definierte Soll-Deformationsstelle für einen begrenzten definierten Deformationsweg in Verfahrrichtung des Überrollkörpers nach einem vorgegebenen Kraft-Weg-Diagramm zum Energieabbau ausgebildet ist.

Durch das an sich starre System des Überrollkörpers wird eine ungerichtete Deformation dieses Systems und damit ein totaler Funktionsverlust vermieden. Das Vorsehen der Soll-Deformationsstelle in dem traversenartigen Stützelement ermöglicht es, daß die bei einem Fahrzeugüberschlag zum Zeitpunkt des Bodenkontaktes des traversenartigen Abstützelementes auftretenden Kraftspitzen durch die erfindungsgemäße Maßnahme gleich zu Beginn des Aufpralles wirkungsvoll in dem Stützelement über die Verformungsenergie abgebaut werden. Dadurch wird mit einfachen Mitteln ohne Erhöhung des Bauvolumens für die im Kraftfluß zum Fahrzeugaufbau befindlichen Komponenten des Überrollschutzsystems, d.h. den Überrollkörper und bei ausfahrbaren Systemen seine Führung und die Wiedereinfahrsperre, die Höchstbelastung spürbar reduziert. Auf diese Weise kann insbesondere ein Abscheren der Zahnflanken der die Wiedereinfahrsperre bildenden Komponenten der Verriegelungseinrichtung oder gar ein Abscheren der Komponenten von deren Befestigungselementen selbst, verhindert werden.

Da die Deformation nur über einen begrenzten Weg in Verfahrrichtung erfolgen kann, bleibt die Schutzfunktion der Wiedereinfahrsperre in jedem Fall erhalten.

Ein weiterer Vorteil der erfindungsgemäßen Lösung besteht in deren leichten Applizierbarkeit an bereits bestehende Überrollschutz-Systeme, da eine weitgehend bauraum- und gewichtsneutrale Integration der "Defo-Traverse" in bestehende Systeme möglich ist.

Die Erfindung ist ferner auf unterschiedlichste Bauformen des Überrollkörpers, insbesondere auf U-förmige metallische Überrollbügel oder auf Überrollkörper aus metallischen Strangpreßprofilen, ohne Einschränkung bei der ästhetischen Gestaltung, anwendbar.

Ausgestaltungen der Erfindung sind in den Unteransprüchen gekennzeichnet und ergeben sich auch aus der Figurenbeschreibung.

Anhand der Beschreibung von in den Zeichnungen dargestellten Ausführungsbeispielen wird die Erfindung näher beschrieben.

Es zeigen:
- Fig. 1: in einer schematischen Längsschnitt-Darstellung ein Überrollschutzsystem mit einem Überrollkörper in Form eines kastenartigen Profilkörpers, der in einem fahrzeugfesten Profilkörper geführt ist, und mit einer Verriegelungseinrichtung in Form einer Zahnstange und einer Zahnklinke, wobei der Profilkörper kopfseitig ein traversenartiges Stützelement aufweist, das als Soll-Deformationsstelle ausgebildet ist,
- Fig. 2: in einer Seitenansicht einen Ausschnitt des kastenartigen Profilkörpers mit dem kopfseitigen Stützelement in Form eines kuppelartig gewölbten Hohlprofils,
- Fig. 3: in einer perspektivischen Darstellung das Überroll-Schutzsystem nach Fig. 1,
- Fig. 4: ein Kraft-Weg-Diagramm unter Darstellung der Wirkung des als definierte Deformationsstelle ausgebildeten traversenartigen Stützelement, und
- Fig. 5: in drei Figurenteilen A, B und C drei verschiedene Ausbildungen des traversenartigen Stützelementes.

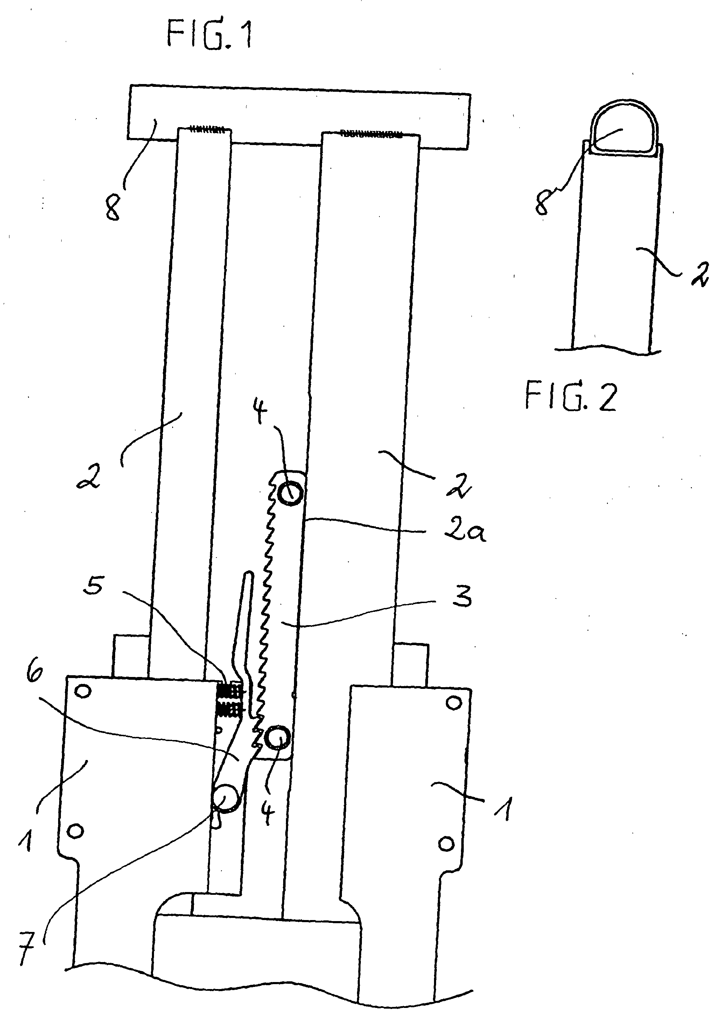

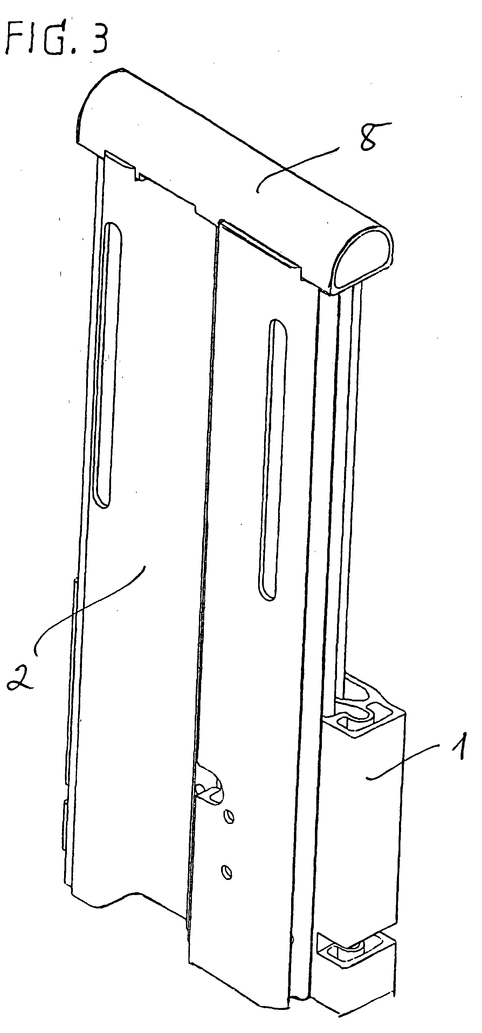

Die Figuren 1 bis 3 zeigen in einem Ausführungsbeispiel ausschnittsweise ein Überrollschutzsystem analog demjenigen nach der eingangs zitierten DE 198 38 989 C1, auf die hiermit hinsichtlich der Offenbarung ausdrücklich Bezug genommen wird. Dieses Überrollschutzsystem besitzt einen kassettenförmigen, fahrzeugfest angebrachten Profil-Führungskörper 1 zur Führung eines aus einem Kastenprofil bestehenden Profil-Überrollkörpers 2, wobei in dem Profil-Führungskörper 1 zusätzliche Führungs-Elemente angebracht sind. Der Profil-Überrollkörper 2 besitzt eine zentrale Öffnung zur Aufnhame einer (nicht dargestellten) Druckfeder für den Schnellantrieb des Überrollkörpers 1. Ferner ist an einer Wandung 2 a des den Überrollkörper 2 bildenden Kastenprofils in bekannter Weise eine Zahnstange 3 als eine der beiden Verriegelungskomponenten der Wiedereinfahrsperre befestigt. Diese Befestigung der Zahnstange erfolgt typischerweise über zwei Schraubverbindungen 4.

Die zweite Verriegelungskomponente wird in bekannter Weise durch eine mittels Federn 5 vorgespannte Zahnklinke 6 gebildet, die auf einem Bolzen 7, der im Profil-Führungskörper 1 gelagert ist, verschwenkbar gehaltert ist.

Die Figuren 1 bis 3 zeigen dabei den verriegelten Zustand des ausgefahrenen Überrollkörpers 2, in dem die Zähne beider Verriegelungskomponenten im verriegelnden Wirkeingriff stehen.

Die Funktion der Verriegelungseinrichtung als Wiedereinfahrsperre ist notorisch bekannter Stand der Technik und braucht daher hier nicht näher beschrieben zu werden.

Im Kopf des Profil-Überrollkörpers 2 ist ein traversenartiges Stützelement 8 formschlüssig aufgenommen, über welches das Kraftfahrzeug im Überschlag abrollt, d.h. welches direkt im Bodenkontakt bei einem Überschlag steht. Das Stützelement kann auch auf andere Weise, z.B. durch Verschweißen, mit dem Profil-Überrollbügel verbunden sein. Im bekannten Fall nach der zitierten DE 198 38 989 C1 ist dieses traversenartige Stützelement ein massives, kastenförmiges Strangpreßprofil mit quadratischem Querschnitt. Dieses Stützelement, der Überrollkörper 2, der zugeordnete Führungskörper 1 und dessen Befestigung am Fahrzeug sind dabei so ausgebildet, daß sie, bezogen auch auf die bei einem Überschlag auftretende Maximallast als starres System ausgebildet sind, d.h. keiner Deformation unterliegen. Bei Überschreiten einer bestimmten Kraft wird das Stützelement jedoch schlagartig zusammengequetscht, d.h. es erfolgt kein kontinuierlicher Lastabbau durch Verformungsarbeit.

Um zu verhindern, daß die Zahnstange 3, auf welche die auf den Überrollkörper wirkende Kraft voll lastet, von der Wandung 2 a abreißt, weil die Befestigung der Zahnstange aus den eingangs genannten Gründen nicht beliebig verstärkt werden kann, und damit die Wiedereinfahrsperre ihre Wirkung verlieren würde, sieht die Erfindung vor, das traversenartige Stützelement 8, das typischerweise ein Profilteil ist, als Soll-Deformationsstelle für einen begrenzten Deformationsweg in Verfahrrichtung des Überrollkörper 2 zum gezielten Energieabbau auszubilden, d.h. mit anderen Worten eine "Defo-Traverse" vorzusehen.

Dazu ist die "Defo-Traverse" hinsichtlich der Gestalt des Profils, ihrer Abmessungen sowie des Materials so ausgebildet, daß bei Überschreiten eines bestimmten Kraftniveaus eine gezielte plastische Verformung der "Defo-Traverse" eintritt, wodurch die Belastungsspitzen abgebaut werden können und der Überrollkörper sowie die Wiedereinfahrsperre die Überrollkräfte aufnehmen können.

Es kommt daher auf einen gleichbleibenden Kraftabbau nach einem vorgegebenen Kraft-Weg-Diagramm an, und nicht darauf, daß die "Defo-Traverse" schlagartig zusammengequetscht wird, weil danach die Kraftspitze praktisch wieder voll anstehen würde.

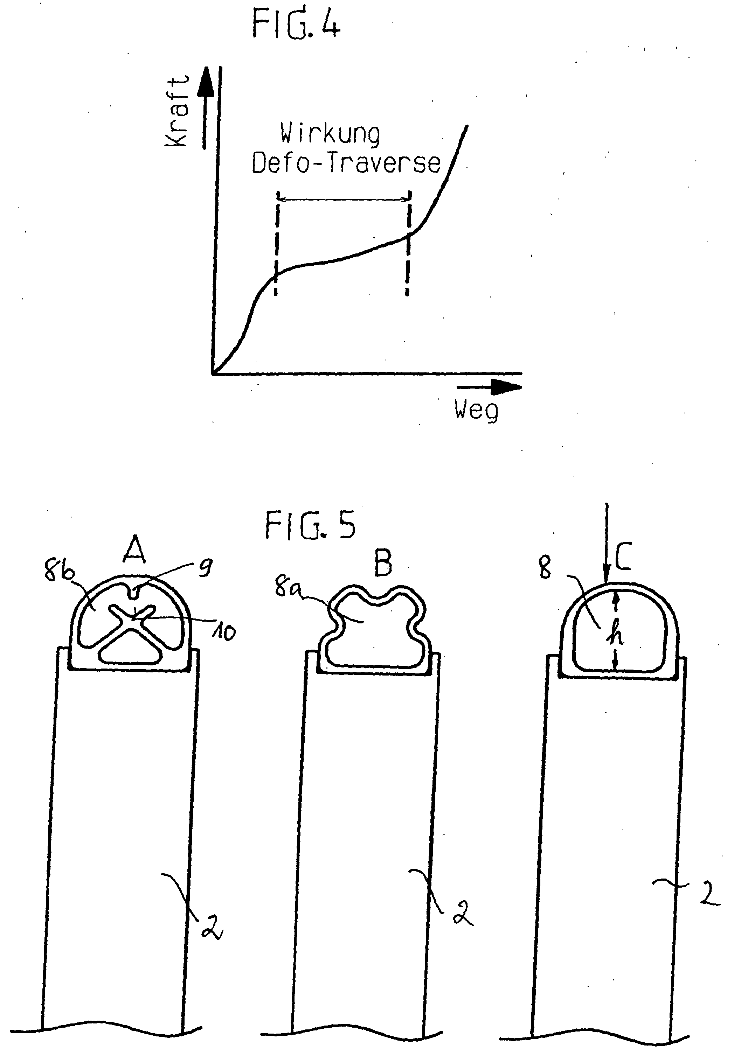

Ein solcher vorgegebener Deformationsweg infolge der Wirkung der "Defo-Traverse" ist in dem Kraft-Weg-Diagramm nach Fig. 4 dargestellt. Nach einem Überschlag steht zunächst die Überrollkraft ohne Verformungsarbeit voll an, danach wirkt die Kraft über eine relativ große Strecke in der "Defo-Traverse" verformend, um danach wieder auf ein starres System zu treffen.

In der Fig. 5 sind in drei Figurenteilen A, B und C verschiedene Konfigurationen der Defo-Traverse dargestellt, die zu einem Kraft-Wege-Verlauf entsprechend Fig. 4 führen, wobei die Konfiguration nach Fig. 5 c derjenigen nach den Figuren 1 - 3 entspricht. Basis dieser Konfigurationen ist jeweils ein Hohlprofilteil.

Die Fig. 5 C zeigt eine kuppelartige Konfiguration des Hohlprofilteiles der Defo-Traverse 8, die sich bei einer äußeren Krafteinwirkung in Pfeilrichtung nicht schlagartig, sondern kontinuierlich verformt und dabei über die Verformungsarbeit Energie abbaut. Die Wandstärke des Hohlprofilteiles ist vorzugsweise von oben nach unten zunehmend, um eine progressiv ansteigende Verformungsarbeit vorgeben zu können. Die Wandstärke kann dabei, wie dargestellt, sich kontinuierlich ändern. Sie kann sich aber auch in Stufen ändern.

Im Fall der Ausführung nach Fig. 5 C ist der Weg, über den ein Kraftabbau durch Verformung stattfinden kann, durch die Höhe h der Kuppel begrenzt, die typischerweise in der Größenordnung von 25 - 45 mm liegt. Um diese Strecke kann daher der Überrollradius kleiner werden, wordurch der Überrollkörper selbst entsprechend länger ausgebildet werden muß.

Die Fig. 5 A zeigt nun eine Konfiguration einer Defo-Traverse 8 b auf der Basis eines kuppelartigen Profilteiles, bei der die Verformungsstrecke stärker begrenzt ist. Diese Ausführung des Profilteiles weist einen inneren mittigen Fortsatz 9 und zwei sich nach oben gekreuzt erstreckende Fortsätze 10 auf. Bei einer äußeren Krafteinwirkung kommt bei Zurücklegung eines vorgegebenen Weges der Fortsatz 9 in den gekreuzten Fortsätzen 10 zur Anlage, wobei, je nach Höhe der Kraft, über das Zusammendrücken der gekreuzten Fortsätze weitere Aufprallenergie progressiv ansteigend abgebaut wird. Da die Fortsätze 10 die Wirkung der Progression vorgeben, kann im Fall der Fig. 5 A die Wandstärke des Hohlprofils der Defo-Traverse 8 b gleichbleibend sein.

Die Fig. 5 B zeigt eine weitere Ausführung einer Defo-Traverse 8 a mit einem Hohlprofilteil, das eine mäanderformige Außenkontur hat. Durch die gewundene Außenkontur wird ebenfalls erreicht, daß das Hohlprofilteil nicht schlagartig, sondern kontinuierlich verformt wird.

Das kuppelartige Hohlprofil kann auch so ausgestaltet sein, daß es eine mittige, durchlaufende, nach innen gerichtete "Delle" aufweist, deren Verformung eine größere Verformungsarbeit bedingt und die auch zusätzlich den Verformungsweg begrenzt.

Alternativ zu der Ausführung nach Fig. 5 A kann das Hohlprofilteil auch so ausgebildet sein, daß es mehrere innere Fortsätze aufweist.

Das Hohlprofil der Defo-Traversen 8, 8 a und 8 b besteht vorzugsweise aus Leichtmetall oder Stahlwerkstofen. Die Wandstärke kann zwischen 1 mm und 5 mm variieren. Die Höhe h liegt bevorzugt im Bereich zwischen 25 und 45 mm. Die Basisbreite liegt im Bereich zwischen 30 und 50 mm.

Generell kann die Konfiguration des Hohlprofils auch anders als in Fig. 5 dargestellt sein. So ist ein liegendes, ovales Profil denkbar, oder ein Rechteckprofil mit nach innen gewölbten Seitenwänden.

Bislang ist nur eine Ausführungsform des Überrollschutzsystems mit einem Profil-Überrollkörper und kopfseitig aufgebrachter Defo-Traverse beschrieben worden.

Die Erfindung ist jedoch auch bei U-förmig ausgestalteten Überrollbügeln anwendbar, die typischerweise aus zwei geführten Schenkelrohren bestehen, die kopfseitig über ein rohrförmiges Querjoch miteinander verbunden sind. Bei einer derartigen Ausführung des Überrollkörpers kann entweder das Querjoch selbst als Defo-Traverse ausgebildet sein, oder auf dem Querjoch wird als separates Teil eine Defo-Traverse angebracht bzw. mit dem Querjoch integriert.

## Patentansprüche

1. Überrollschutzsystem für Kraftfahrzeuge, mit
- einem Überrollkörper, der sich im Überrollfall an einem Aufbauteil des Kraftfahrzeuges abstützt und kopfseitig mindestens ein Stützelement besitzt, über welches das Kraftfahrzeug im Überschlagfall abrollt, und
- einer Soll-Deformationsstelle zum Abbau von Lastspitzen bei einem Überschlag,
**dadurch gekennzeichnet, daß** das Stützelement (8, 8 a, 8 b) als definierte Soll-Deformationsstelle für einen begrenzten, definierten Deformationsweg in Last-Richtung nach einem vorgegebenen Kraft-Weg-Diagramm zum Energieabbau der zum Zeitpunkt des Bodenkontaktes des Stützelementes kurzzeitig auftretenden hohen Lastspitze durch Verformungsarbeit ausgebildet ist.

2. Überrollschutzsystem für Kraftfahrzeuge nach Anspruch 1, mit einem Überrollkörper (2), der in einem fahrzeugfesten Führungskörper (1) geführt aufgenommen ist, der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine mittels einer Wiedereinfahrsperre verriegelte obere, schützende Stellung bringbar ist, und der kopfseitig ein traversenartiges Stützelement besitzt, über welches das Kraftfahrzeug im Überschlagfall abrollt,
**dadurch gekennzeichnet, daß** der Überrollkörper (2), der zugeordnete Führungskörper (1) und dessen Befestigung am Fahrzeug, sowie die Wiedereinfahrsperre (3, 6) bezogen auf die bei einem Überschlag auftretende Maximallast als starres System ausgebildet sind, und das traversenartige Stützelement (8, 8 a, 8 b) als definierte Soll-Deformationsstelle für einen begrenzten definierten Deformationsweg in Verfahrrichtung des Überrollkörpers (2) nach einem vorgegebenen Kraft-Weg-Diagramm zum Energieabbau ausgebildet ist.

3. Überrollschutzsystem nach Anspruch 1 oder 2, **dadurch gekennzeichnet, daß** das traversenartige Stützelement (8, 8 a, 8 b) als Hohlprofilteil ausgebildet ist.

4. Überrollschutzsystem nach einem der Ansprüche 1 bis 3, **dadurch gekennzeichnet, daß** das traversenartige Stützelement (8, 8 a, 8 b) auf den Überrollkörper (2) aufgesetzt ist.

5. Überrollschutzsystem nach einem der Ansprüche 1 bis 3, **dadurch gekennzeichnet, daß** das traversenartige Stützelement (8, 8 a, 8 b) in den Überrollkörper (2) integriert ist.

6. Überrollschutzsystem nach einem der Ansprüche 1 bis 5, **dadurch gekennzeichnet, daß** der Überrollkörper (2) durch einen kastenförmigen Profilkörper gebildet ist.

7. Überrollschutzsystem nach einem der Ansprüche 1 bis 5, **dadurch gekennzeichnet, daß** der Überrollkörper (2) durch einen U-förmigen Überrollbügel gebildet ist.

8. Überrollschutzsystem nach einem der Ansprüche 2 bis 4, **dadurch gekennzeichnet, daß** das Hohlprofil gezielte Querschnittsveringerungen und/oder Materialreduzierungen aufweist.

9. Überrollschutzsystem nach Anspruch 8, **dadurch gekennzeichnet, daß** das Hohlprofil kuppelartig ausgebildet ist.

10. Überrollschutzsystem nach Anspruch 9, **dadurch gekennzeichnet, daß** die Wandstärke des Profils von der Basis zum Kopf hin abnimmt.

11. Überrollschutzsystem nach Anspruch 10, **dadurch gekennzeichnet, daß** die Wandstärke koninuierlich oder gestuft abnimmt.

12. Überrollschutzsystem nach Anspruch 9, **dadurch gekennzeichnet, daß** an dem Hohlprofil nach innen gerichtete Fortsätze (9, 10) zur Begrenzung des Deformationsweges angeformt sind.

13. Überrollschutzsystem nach Anspruch 9, **dadurch gekennzeichnet, daß** das Hohlprofil eine mittige Eindellung aufweist.

14. Überrollschutzsystem nach Anspruch 8, **dadurch gekennzeichnet, daß** das Hohlprofil zumindest in Teilen mäanderförmig ausgestaltet ist.

## Claims

1. A rollover protection system for motor vehicles, having
- a rollover body that in the event of a rollover is supported against a bodywork part of the motor vehicle and that has at least one support element at its top end, over which support element the motor vehicle rolls in the event of a rollover, and
- a predetermined deformation site for dissipating load peaks in a rollover,
**characterised in that** the support element (8, 8a, 8b) is constructed as a predetermined deformation site for a limited, defined deformation distance in the direction of the load in accordance with a predetermined force/distance diagram for dissipating by deformation work the energy of the high load peak momentarily occurring at the point in time when the support element makes contact with the ground.

2. A rollover protection system for motor vehicles according to claim 1, having a rollover body (2) that is received in a guiding manner in a guide body (1) fixed to the vehicle, that in the normal state can be held by a retaining device in a lower, retracted rest position against the force of at least one pre-loaded driving compression spring and that, upon release of the retaining device, can be brought by the spring force of the driving compression spring into an upper, protecting position which is locked by means of a retraction-blocking mechanism, and that has at its top end a crossbar-like support element over which the motor vehicle rolls in the event of a rollover,
**characterised in that** the rollover body (2), the associated guide body (1) and its fixture to the vehicle, and the retraction-blocking mechanism (3, 6) are constructed as a rigid system in relation to the maximum load occurring in a rollover, and the crossbar-like support element (8, 8a, 8b) is constructed as a predetermined deformation site for a limited defined deformation distance in the direction of movement of the rollover body (2) in accordance with a predetermined force/distance diagram to dissipate energy.

3. A rollover protection system according to claim 1 or claim 2, **characterised in that** the crossbar-like support element (8, 8a, 8b) is constructed in the form of a hollow profiled section.

4. A rollover protection system according to any one of claims 1 to 3, **characterised in that** the crossbar-like support element (8, 8a, 8b) is placed on the rollover body (2).

5. A rollover protection system according to any one of claims 1 to 3, **characterised in that** the crossbar-like support element (8, 8a, 8b) is integrated in the rollover body (2).

6. A rollover protection system according to any one of claims 1 to 5, **characterised in that** the rollover body (2) is formed by a box-type profiled section.

7. A rollover protection system according to any one of claims 1 to 5, **characterised in that** the rollover body (2) is formed by a U-shaped roll bar.

8. A rollover protection system according to any one of claims 2 to 4, **characterised in that** the hollow profiled section exhibits specific reductions in cross-section and/or in material.

9. A rollover protection system according to claim 8, **characterised in that** the hollow profiled section has a dome-like shape.

10. A rollover protection system according to claim 9, **characterised in that** the wall thickness of the profiled section decreases from the bottom to the top.

11. A rollover protection system according to claim 10, **characterised in that** the wall thickness decreases continuously or in stages.

12. A rollover protection system according to claim 9, **characterised in that** inwardly pointing continuations (9, 10) are integrally formed on the hollow profiled section to limit the deformation distance.

13. A rollover protection system according to claim 9, **characterised in that** the hollow profiled section has a central depression.

14. A rollover protection system according to claim 8, **characterised in that** the hollow profiled section is meander-shaped at least in parts.

## Revendications

1. Système de protection au retournement pour véhicules automobiles, avec
un corps de protection au retournement qui, en cas de retournement, s'appuie sur un élément de carrosserie du véhicule automobile et qui comporte, du côté de la tête, au moins un élément support sur lequel le véhicule automobile roule en cas de retournement, et
un point destiné à la déformation pour la réduction des pointes de charge lors d'un capotage,
**caractérisé en ce que** l'élément support (8, 8a, 8b) est configuré par un travail de déformation comme point défini destiné à la déformation pour une trajectoire de déformation limitée, définie, dans le sens de la charge suivant un diagramme force-trajectoire prédéterminé pour la réduction de l'énergie de la pointe de charge élevée se produisant momentanément au moment du contact de l'élément support avec le sol.

2. Système de protection au retournement pour véhicules automobiles selon la revendication 1, avec
un corps de protection au retournement (2) qui est logé guidé dans un corps de guidage fixé au véhicule automobile (1) qui, à l'état normal, peut être maintenu dans une position de repos inférieure rentrée contre la force d'au moins un ressort de pression de commande précontraint par un dispositif de retenue et qui, lors du desserrage du dispositif de retenue par la force de ressort du ressort de pression de commande, peut être amené dans une position supérieure de protection, verrouillée à l'aide d'un blocage de rentrée, et qui, du côté de la tête, comporte un élément support du type traverse sur lequel le véhicule automobile roule en cas de retournement,
**caractérisé en ce que** le corps de protection au retournement (2), le corps de guidage associé (1) et son système de fixation sur le véhicule automobile ainsi que le blocage de rentrée (3, 6) sont configurés comme système rigide par rapport à une charge maximale se produisant en cas de capotage, et l'élément support du type traverse (8, 8a, 8b) est configuré comme point défini destiné à la déformation pour une trajectoire de déformation limitée, définie, dans le sens d'avance du corps de protection au retournement (2) suivant un diagramme force-trajectoire prédéterminé pour la réduction de l'énergie.

3. Système de protection au retournement selon la revendication 1 ou 2, **caractérisé en ce que** l'élément support du type traverse (8, 8a, 8b) est configuré comme élément de profilé creux.

4. Système de protection au retournement selon l'une quelconque des revendications 1 à 3, **caractérisé en ce que** l'élément support du type traverse (8, 8a, 8b) est posé sur le corps de protection au retournement (2).

5. Système de protection au retournement selon l'une quelconque des revendications 1 à 3, **caractérisé en ce que** l'élément support du type traverse (8, 8a, 8b) est intégré dans le corps de protection au retournement (2).

6. Système de protection au retournement selon l'une quelconque des revendications 1 à 5, **caractérisé en ce que** le corps de protection au retournement (2) est formé par un corps de profilé en forme de caisse.

7. Système de protection au retournement selon l'une quelconque des revendications 1 à 5, **caractérisé en ce que** le corps de protection au retournement (2) est formé par un arceau de sécurité en forme de U.

8. Système de protection au retournement selon l'une quelconque des revendications 2 à 4, **caractérisé en ce que** le profilé creux comporte des réductions de section appropriées et/ou des réductions de matière.

9. Système de protection au retournement selon la revendication 8, **caractérisé en ce que** le profilé creux est conçu en forme de coupole.

10. Système de protection au retournement selon la revendication 9, **caractérisé en ce que** l'épaisseur de paroi du profil diminue entre la base et la tête.

11. Système de protection au retournement selon la revendication 10, **caractérisé en ce que** l'épaisseur de paroi diminue en continu ou graduellement.

12. Système de protection au retournement selon la revendication 9, **caractérisé en ce que** des prolongements dirigés vers l'intérieur (9, 10) sont formés dans le profil creux pour limiter la trajectoire de déformation.

13. Système de protection au retournement selon la revendication 9, **caractérisé en ce que** le profilé creux comprend une empreinte centrale.

14. Système de protection au retournement selon la revendication 8, **caractérisé en ce que** le profilé creux est conçu en forme de méandre au moins par segments.
